# EUROPÄISCHE PATENTSCHRIFT

(11) **EP 2 923 016 B1**
(45) Veröffentlichungstag und Bekanntmachung des Hinweises auf die Patenterteilung: **21.12.2016**
(21) Anmeldenummer: 14720489.5
(22) Anmeldetag: 25.04.2014
(51) Int. Cl.: E04H 9/02, E04B 1/98, E02D 27/34

(54) **BAUWERK MIT EINER ERDBEBENDÄMPFUNG**
BUILDING HAVING AN EARTHQUAKE-DAMPING SYSTEM
OUVRAGE PRÉSENTANT UN DISPOSITIF D'ATTÉNUATION D'UN TREMBLEMENT DE TERRE

(30) Priorität: 26.04.2013 AT 3532013
(43) Veröffentlichungstag der Anmeldung: 30.09.2015
(73) Patentinhaber: Mageba S.A., 8180 Bülach (CH)
(72) Erfinder: WOLFF, Georg, Michael, A-4020 Linz (AT)
(74) Vertreter: Grättinger Möhring von Poschinger Patentanwälte Partnerschaft
(86) Internationale Anmeldenummer: PCT/EP2014/001105
(87) Internationale Veröffentlichungsnummer: WO 2014/173543

(56) Entgegenhaltungen:
- WO-A1-02/092944
- DE-A1- 3 719 673
- FR-A1- 2 619 589

## Beschreibung

Die Erfindung betrifft ein Bauwerk mit einer Erdbebendämpfung umfassend ein Fundament und eine Grundplatte, wobei zwischen dem Fundament und der Grundplatte eine Gleitlagerung ausgebildet ist, sodass die Grundplatte verschiebbar auf dem Fundament angeordnet ist.

Ein Hauptproblem bei der Absicherung von Bauwerken gegen Erdbeben sind die mit hoher Geschwindigkeit und Intensität auftretenden Horizontalkräfte. Zur Dämpfung der Horizontalkräfte werden nach dem Stand der Technik Erdbebenlager, zumeist entsprechend der Europäischen Norm EN 15129 eingesetzt. Üblicherweise sind das bei Gebäuden so genannte "Isolatoren" in der Bauweise von kleinflächigen bewehrten Elastomerlagern, Elastomerlagern mit Bleikern oder Gleitlagern, wobei über die Grundfläche des Bauwerks mehrere dieser Lager angeordnet werden, die die Lagerstellen bilden. Diese Lager werden auf einer Fundamentplatte angeordnet, die die Vertikal- und Horizontallasten in den Baugrund abträgt. Auf der Oberseite der Lager ist die Grundplatte des Bauwerks angeordnet, die das Bauwerk trägt und sich auf den Lagern, mit denen sie schubfest verbunden ist, abstützt.

Diese Bauweise hat den Nachteil, dass die Vertikallasten auf die Lagerstellen konzentriert werden müssen und dann wieder zur Einleitung in den Baugrund verteilt werden müssen. Daraus ergibt sich, dass die Fundamentplatte und die Grundplatte relativ dick und daher teuer hergestellt werden müssen. Sollte nach langer Betriebszeit ein Lager zu prüfen sein oder ausgewechselt werden müssen, z.B. weil die Lager aufgrund der Alterung die gewünschte Dämpfungseigenschaft verlieren, ist das nur möglich, wenn bereits in der Bauphase mit beträchtlichem Aufwand eine Anhebemöglichkeit des Bauwerks und die Zugänglichkeit der Lager vorgesehen werden.

Bei den zur Verbesserung der Erdbebensicherheit eines Bauwerks häufig verwendeten bewehrten Elastomerlagern mit Bleikern ist das funktionsentscheidene Bauteil "Bleikern" nicht hinsichtlich aufgetretener Schäden, Risse oder dergleichen prüfbar, ohne dass das Lager ausgebaut wird.

Ein Problem ist auch, dass manche der Lager gern. EN 15129 keine selbstzentrierende Eigenschaft haben und sich daher nach einer erdbebenbedingten Horizontalkraftwirkung nicht in die zentrische Position zurückstellen. Bei einem später auftretenden Nachbeben kann es dann sein, dass die Lager in verschobener Position stehen und in einer Richtung keine Dämpfungswirkung entfalten können.

Um diesem Problem Herr zu werden, wurden im Stand der Technik bereits verschiedene Lösungen vorgeschlagen. So beschreibt z.B. die WO 2009/139645 A1 eine Lageranordnung mit einem oberen Lagersitz, einem unteren Lagersitz und einem dazwischen angeordneten, verschiebbaren, tragenden Lagerelement. Durch die auftretende Reibung zwischen dem gleitenden und tragenden Lagerelement und dem oberen und /oder unteren Lagersitz wird die horizontale Relativbewegung zwischen den oberen Lagersitz und dem unteren Lagersitz gedämpft. Mit dem gleitenden und tragenden Lagerelement und dem oberen und /oder unteren Lagersitz sind zur Zentrierung der Lageranordnung eine Mehrzahl von elastischen Schnüren verbunden. Abgesehen davon, dass dieser Aufbau relativ aufwändig ist, bergen die elastischen Schnüre auch ein höheres Ausfallsrisiko in sich.

Aus dem Stand der Technik ist weiter das Prinzip der vollflächigen Lagerung von Bauwerken bekannt. So beschreibt beispielsweise die DE 20 2004 011 465 U1 ein erdbebensicheres Gebäude, das einen im Boden eingebetteten Unterbau und einen darauf ruhenden Oberbau aufweist, wobei der Oberbau an seiner unteren Seite als ein oberes Fundament verstärkt ausgebildet ist, der Unterbau ein unteres Fundament bildet, und sich der Oberbau über eine horizontal gleitende, geschmierte Gründung auf dem Unterbau abstützt, die aus einer an der unteren Seite des oberen Fundaments befestigten Holzplatte und einer auf der oberen Seite des unteren Fundaments aufgetragenen Ölschicht als Schmierung besteht, wobei das obere Fundament an seinem Umfang eine Anzahl von aufrecht stehenden H-Profilen zum Aufbau des Bauwerks aufweist. Für die Ölschicht wird Talg oder ein anderes schmierfähiges Öl oder Fett eingesetzt.

Dieser Aufbau mit der Holzplatte, die auf einer Ölschicht "schwimmend" gelagert ist, mag zwar für einfache Gebäude genügen, große Stahlbetonbauten sind damit aber kaum ausrüstbar. Zudem ist auch bei dieser Art eines "Erdbebenlagers" eine Wartung erforderlich, nämlich der Ölschicht, die wiederum nur über das Anheben des Bauwerks möglich ist.

Für den Fall, dass die Horizontallast eines Erdbebens höher ist als erwartet, kann es zudem sein, dass bei den bekannten Erdbebenlagerungen die Grundplatte ruckartig an die Umrandung der Fundamentplatte stößt und es dadurch zu Schäden am Bauwerk kommt.

Aus der DE 3719673 A1 ist ein Bauwerk mit einer Erdbebendämpfung bekannt. Das erschütterungsfeste Fundament dieses Bauwerks umfasst einen Bewegungsdämpferteil mit einem geschlossenen, seitlich mit einem elastischen Material isolierten Überdruckraum. Dieser wird durch einen von zwei Eisenbetonplatten umschlossenen, sich unter dem gesamten Grundkörper des Gebäudes erstreckenden Druckluftraum gebildet. Zur Aufnahme von auf das Gebäude wirkenden Windkräften sind am Umfang des der gebäudeseitigen Eisenbetonplatte Federn angeordnet, welche sich an einem Kragen der gründungsseitigen Eisenbetonplatte abstützen.

Die WO 02/092944 A1 offenbart eine Bauwerksstruktur, die sich durch eine gründungsseitige Wanne und eine darin angeordnete gebäudeseitige Bodenplatte auszeichnet. Ein sowohl unter der Bodenplatte als auch seitlich von dieser zu der Wanne eingehaltener Spalt ist mit einem elastischen Material (insbesondere einem aus Altreifen hergestellten Gummigranulat) verfüllt.

Nach der FR 2619589 A1 ist zur erdbebensicheren Gründung eines Bauwerks dessen vor Ort gegossene Stahlbeton-Bodenplatte - über eine plastische Zwischenschicht gleitfähig - auf eine gründungsseitige Zwischenplatte aufgesetzt, welche ihrerseits gleitfähig auf ein in eine Stahlbetonumfassung eingefülltes Bett aus einer kompaktierten und nach oben hin versiegelte Masse aus ... aufgesetzt ist.

Der vorliegenden Erfindung liegt, in Ansehung des dargelegten Standes der Technik, die Aufgabe zugrunde, eine verbesserte, erdbebendämpfende Lagerung für ein Bauwerk zu schaffen.

Diese Aufgabe wird durch das in Anspruch 1 angegebene Bauwerk gelöst. Ebenfalls gelöst wird die Aufgabe durch das in Anspruch 7 angegebene Verfahren zur Herstellung einer Erdbebendämpfung für ein Bauwerk. Demgemäß hat die vorliegende Erfindung einerseits zum Gegenstand ein Bauwerk mit einer Erdbebendämpfung umfassend ein Fundament und eine Grundplatte, wobei zwischen dem Fundament und der Grundplatte eine Gleitlagerung ausgebildet ist, so dass die Grundplatte verschiebbar auf dem Fundament angeordnet ist, wobei die Gleitlagerung durch zumindest eine Kunststofffolie oder Kunststoffplatte gebildet ist und sich vollflächig über zumindest annähernd die gesamte Fläche erstreckt, die die Grundplatte auf der dem Fundament zugewandten Seite aufweist, wobei weiterhin das Fundament einen Kragen und eine solche Größe aufweist, dass zwischen der Grundplatte und dem Kragen über den gesamte Umfang der Grundplatte betrachtet ein Spalt ausgebildet ist, wobei in diesem Spalt zumindest ein sich über den gesamten Umfang der Grundplatte erstreckendes elastisches Dämpfungselement angeordnet ist. Andererseits hat die vorliegende Erfindung demgemäß zum Gegenstand ein Verfahren zur Herstellung einer Erdbebendämpfung für ein Bauwerk, wobei das Bauwerk ein Fundament und eine Grundplatte umfasst, wobei zwischen dem Fundament und der Grundplatte eine Gleitlagerung ausgebildet wird, sodass die Grundplatte verschiebbar auf dem Fundament angeordnet ist, wobei die Gleitlagerung durch zumindest eine Kunststofffolie oder Kunststoffplatte gebildet und vollflächig über zumindest annähernd die gesamte Fläche erstreckend ausgebildet wird, die die Grundplatte auf der dem Fundament zugewandten Seite aufweist, wobei weiterhin an dem Fundament ein Kragen ausgebildet und das Fundament mit einer solchen Größe hergestellt wird, dass zwischen der Grundplatte und dem Kragen über den gesamte Umfang der Grundplatte betrachtet ein Spalt ausgebildet wird, wobei in diesem Spalt zumindest ein sich über den gesamten Umfang der Grundplatte erstreckendes elastisches Dämpfungselement angeordnet wird.

Von Vorteil ist dabei, dass durch diesen konstruktiven Aufbau die Vertikallastabtragung von der (gedämpften) Horizontallastabtragung baulich getrennt wird. Es ist weiter von Vorteil, dass das Fundament und Grundplatte wesentlich dünner und damit kostengünstiger hergestellt werden können, da die Vertikallastabtragung flächig erfolgt und es nicht zu Lastkonzentrationen wie bei der Verwendung von den voranstehend genannten kleinflächigen Lagern kommt. Dadurch, dass das oder die elastische(n) Dämpfungselement(e) im Spalt zwischen dem Kragen des Fundaments und der Grundplatte angeordnet sind, ist dieses bzw. sind diese einfacher für Überprüfungen und für den Austausch zugänglich. Zudem wird durch diese Anordnung des zumindest einen Dämpfungselementes seitlich neben der Grundplatte erreicht, dass im Fall, dass die Horizontallast des Erdbebens höher ist als erwartet, die Grundplatte nicht ruckartig an den Kragen des Fundaments stößt, sondern gedämpft. Weiter wird mit der konstruktiven Ausgestaltung erreicht, dass bei einem Erdbeben unter dem Bauwerk entstehende Spalte im Fundament besser überbrückt werden können.

Dadurch, dass die Gleitlagerung durch zumindest eine Kunststofffolie oder Kunststoffplatte gebildet ist, wird ein einfacher Aufbau der Gleitlagerung erreicht, der zudem in geringer Schichtdicke ausgeführt werden kann. Somit ist es möglich, die gesamte Erdbebendämpfung hinsichtlich ihrer Höhe deutlich zu verringern, da, wie voranstehend ausgeführt, auch das Fundament und die Grundplatte dünner ausgeführt werden können. Anders als bei der Lagerung nach der DE 20 2004 011 465 U1 wird das vollflächige Gleiten des Bauwerks nicht durch ein alterungsgefährdetes Schmiermittel, sondern durch ein- oder mehrschichtiges Gleitlager erreicht. Es kann damit die Beständigkeit der Gleitlagerung deutlich verbessert werden. Zudem ist damit die vollflächige Gleitlagerung auch für relativ schwere Bauten, wie z.B. von mehrgeschossigen Gebäuden, möglich.

Es ist weiter möglich, dass die Gleitlagerung zwei Kunststofffolien oder Kunststoffplatten aufweist, wobei eine Kunststofffolie oder Kunststoffplatte mit dem Fundament und die andere Kunststofffolie oder Kunststoffplatte mit der Grundplatte verbunden ist. Mit dieser Ausführungsvariante wird erreicht, dass die Relativbewegung bei einem Erdbeben zwischen zwei Kunststoffbauteilen erfolgt, wodurch die bei der Gleitbewegung hervorgerufene Reibung reduziert werden kann bzw. besser auf einen vordefinierbaren Wert eingestellt werden kann. Es ist damit die Auslegung der Erdbebenlagerung einfacher durchführbar.

Bevorzugt ist der Kunststoff der Kunststofffolie oder Kunststoffplatte ausgewählt aus einer Gruppe umfassend PE, insbesondere UHMWPE, PTFE, POM, faserverstärkte Kunststoffe, wie z.B. GFK. Durch den Einsatz dieser Kunststoffe, insbesondere von UHMWPE, kann einerseits die Verschleißbeständigkeit der Gleitlagerung und andererseits können damit auch die Gleiteigenschaften der Gleitlagerung verbessert werden, wodurch auch die voranstehend genannten Effekte zumindest zum Teil verbessert werden können.

Dadurch, dass sich das zumindest eine elastische Dämpfungselement über den gesamten Umfang der Grundplatte erstreckt, kommt es vorteilhafterweise auch hinsichtlich der Horizontalkräfte zu einer flächigen Durchleitung anstelle von Lastkonzentrationen, wodurch die Erdbebendämpfung weiter verbessert werden kann.

Es kann weiter vorgesehen sein, dass das zumindest eine elastische Dämpfungselement mit der Grundplatte und/oder dem Kragen des Fundaments verbunden ist, wodurch erreicht wird, dass zumindest eine elastische Dämpfungselement die Dämpfungswirkung auf Zug und Druck entfalten kann. Wenn das elastische Dämpfungselement sowohl mit der Grundplatte als auch mit dem Kragen verbunden ist, kann erreicht werden, dass die Erdbebendämpfungseinrichtung auch die gewünschte Rückzentrierungseigenschaft aufweist.

Zur Verbesserung der Anbindung des elastischen Dämpfungselementes an die Grundplatte und/oder den Kragen des Fundaments kann vorgesehen sein, dass an der Grundplatte und/oder dem Kragen des Fundaments Ankerelemente vorgesehen sind, die in das zumindest eine elastische Dämpfungselement eingegossen sind.

Die Gleitlagerung erstreckt sich vorzugsweise bis unterhalb des zumindest einen elastischen Dämpfungselementes, wodurch das Zusammendrücken des Dämpfungselementes aufgrund der Relativbewegung der Grundplatte erleichtert wird. Andererseits kann damit aber auch die Rückzentriereigenschaft verbessert werden.

Nach einer Ausführungsvariante des Verfahrens kann vorgesehen sein, dass der Spalt zwischen dem Kragen und der Grundplatte zumindest teilweise mit einer elastischen Dämpfungsmasse zur Herstellung des zumindest einen elastischen Dämpfungselementes ausgegossen wird. Durch das Ausgießen (insbesondere vor Ort auf der Baustelle) wird einerseits erreicht, dass die Herstellung des Dämpfungselementes einfacher erfolgen kann. Es ist damit aber auch möglich, dass (eventuell) vorhandene Bautoleranzen ausgeglichen werden, wodurch die Systemeigenschaften der Erdbebendämpfung durch die bessere Anbindung des elastischen Dämpfungselementes verbessert werden können. Darüber hinaus ist auf diese Weise auch die Einbettung der voranstehend genannten Ankerelemente in das elastische Dämpfungselement einfacher durchführbar.

Zum besseren Verständnis der Erfindung wird diese anhand der nachfolgenden Figur näher erläutert.

Es zeigt jeweils in schematisch vereinfachter Darstellung:

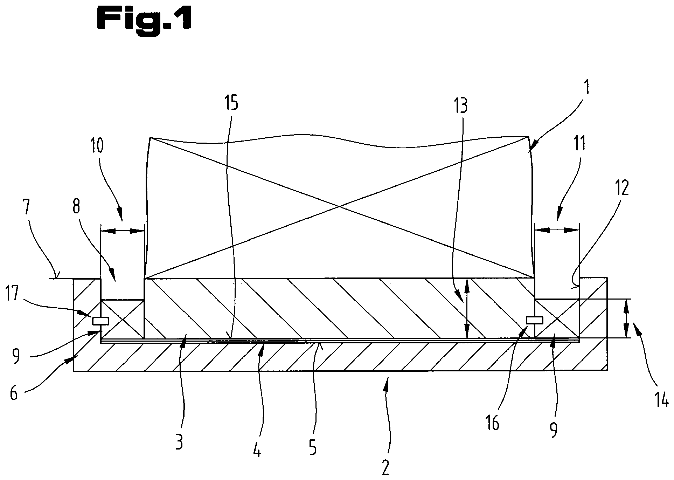

Fig. 1 ein Bauwerk mit einer Erdbebendämpfung in Seitensicht geschnitten.

Einführend sei festgehalten, dass die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen sind.

In Fig. 1 ist ein Bauwerk 1 in Seitenansicht geschnitten dargestellt.

Das Bauwerk 1 kann jegliche Art von Bauwerk sein, beispielsweise Wohngebäude, Bürogebäude, Planetarien, etc. Es kann aber auch eine Industrieanlage sein, wie z.B. ein Kraftwerke, ein Flüssigkeitslager bzw. Flüssigkeitstank. Ebenso kann das Bauwerk 1 auch eine Maschine, bzw. entsprechende Anlagenteile, sein. Auch kreisrunde Bauwerke, wie Kühltürme von Kraftwerken oder Flüssiggastanks, sind Bauwerke 1 im Sinne der Erfindung.

Der Begriff "Bauwerk" wird im Sinne der Erfindung also nicht beschränkt auf Gebäude gesehen.

Das Bauwerk 1 ist mit einer Erdbebendämpfungsvorrichtung versehen. Diese Erbebendämpfungsvorrichtung umfasst ein Fundament 2, insbesondere eine Fundamentplatte, sowie eine Grundplatte 3. Die Grundplatte 3 ist oberhalb des Fundaments 2 angeordnet.

Das Fundament 2 ist üblicherweise aus einem bewehrten, d.h. armierten, Stahlbeton hergestellt. Anstelle von Stahlbeton kann das Fundament 2 aber auch aus einem anderen Werkstoff hergestellt sein, beispielsweise aus einem Metall, wie z.B. Stahl. Derartige Metallplatten können insbesondere als Fundamente von Maschinen eingesetzt werden.

Die Grundplatte 3 bildet jenen Teil des Bauwerks 1, auf dem das Bauwerk aufgebaut ist. Beispielsweise ist die Grundplatte 3 wiederum aus einem bewehrten Stahlbeton hergestellt. Auf diesem können z.B. die Mauern eines Gebäudes angeordnet werden. In diesem Sinn kann die Grundplatte 3 auch als Bodenplatte bezeichnet werden. Dieses Beispiel soll nur stellvertretend für andere Aufbauten von anderen Bauwerken 1 genannt werden.

Anstelle von Stahlbeton kann auch für die Grundplatte 3 ein anderer Werkstoff verwendet werden, beispielsweise wiederum ein Metall.

Zwischen dem Fundament 2 und der Grundplatte 3 ist eine Gleitlagerung 4 ausgebildet. Das Fundament 2 und die Grundplatte 3 liegen dabei unmittelbar an der Gleitlagerung 4 an. Durch diese Gleitlagerung 4 wird der Grundplatte 4 eine Bewegung relativ zum Fundament 2 ermöglicht.

Die Gleitlagerung 4 weist eine Fläche auf die zumindest annähernd der Größe einer unteren, auf das Fundament 2 weisenden Oberfläche 5 der Grundplatte 3 entspricht. Somit erstreckt sich also die Gleitlagerung 4 zumindest annähernd vollflächig über die Oberfläche 4 der Grundplatte 3. Vorzugsweise weist die Gleitlagerung zumindest eine flächenmäßige Ausdehnung aus, die der flächenmäßigen Ausdehnung der unteren Oberfläche 5 der Grundplatte 3 entspricht.

Das Fundament 2 weist Seitenwände 6 auf, die auf der Fundamentplatte angeordnet sind und von dieser nach oben abstehen. Insbesondere sind die Seitenwände 6 einteilig mit der Fundamentplatte hergestellt, sodass also das Fundament 2 aus einem Bauteil besteht.

Die Seitenwände 6 können wiederum aus einem bewehrten Stahlbeton oder einem anderen Werkstoff bestehen, wie dies voranstehend ausgeführt wurde.

Insbesondere sind über den gesamten Umfang - in horizontaler Richtung betrachtet - der Fundamentplatte derartige Seitenwände 6 angeordnet bzw. ausgebildet, sodass also das Fundament 2 wannenförmig ausgebildet ist. In dieser Wanne ist die Grundplatte 3 aufgenommen. Dabei kann die Grundplatte 3 zu einem Niveau 7 des Fundaments 2, d.h. der Seitenwände 6, zumindest annähernd bündig verlaufend ausgebildet sein. Es ist aber auch möglich, dass die Grundplatte 2 unterhalb oder oberhalb der Niveaus 7 endet, wobei die Ausführungsvariante "unterhalb" nicht bevorzugt ist, da in diesem Fall u.U. bei einem Erdbeben Kräfte aus der Erdbebendämpfung in z.B. ein Mauerwerk einwirken.

Die Seitenwände 6 bilden also einen Kragen des Fundaments 3.

Wie aus Fig. 1 deutlich ersichtlich ist, ist die Grundfläche des Fundaments 2 größer als die Grundfläche der Grundplatte 3. Es wird damit zwischen den Seitenwänden 6 und der Grundplatte 2 ein Spalt 8 ausgebildet, der sich insbesondere über den gesamten Umfang - in horizontaler Richtung betrachtet - der Grundplatte 3 erstreckt. Es ist damit möglich, dass sich die Grundplatte 3 in der Horizontalen in jede Richtung relativ zum Fundament 2, d.h. den Seitenwänden 6 bei einem Erdbeben bewegen kann.

In dem Spalt 8 ist zumindest ein Dämpfungselement 9 angeordnet. Vorzugsweise weist das Dämpfungselement 9 eine Breite 10 auf, die einer Spaltbreite 11 in gleicher Richtung entspricht. Der Spalt 8 wird also in horizontaler Richtung bevorzugt zur Gänze von dem zumindest einen Dämpfungselement 9 ausgefüllt.

Die Spaltbreite 11 ergibt sich aus den Abmessungen des zumindest einen Dämpfungselementes 9, die durch die Dämpfungswirkung des Werkstoffes für das zumindest eine Dämpfungselement 9 und die geplante Horizontalkraftaufnahme bestimmt wird.

Es ist aber auch möglich, wenngleich nicht bevorzugt, dass das Dämpfungselement 9 eine geringfügig kleinere Breite 10 als die Spaltbreite 11 aufweist.

Mit dem Ausdruck "zumindest ein" in Bezug auf das Dämpfungselement 9 ist gemeint, dass dieses über den Umfang der Grundplatte 3 verlaufend aus einem Bauteil gebildet ist. Dies ist z.B. dadurch herstellbar, indem das Dämpfungselement 9 durch Ausgießen des Spaltes 8 mit einer entsprechenden Dämpfungsmasse hergestellt wird, insbesondere vor Ort, also z.B. auf der Baustelle.

Das Dämpfungselement 9 kann aber auch mehrteilig ausgebildet sein. Beispielsweise können mehrere Einzelblöcke in Umfangsrichtung der Grundplatte 3 - in horizontaler Richtung betrachtet - hintereinander und insbesondere aneinander anschließend angeordnet werden.

Alternativ oder zusätzlich dazu ist es möglich, dass das Dämpfungselement 9 eine Sandwichstruktur aus mehreren, insbesondere miteinander verbundenen, Schichten aufweist. So ist es z.B. möglich das Dämpfungselement 9 in vertikaler Richtung aus mehreren Lagen aufzubauen. Auch in horizontaler Richtung können mehrere Lagen zur Ausbildung des Dämpfungselementes 9 angeordnet bzw. ausgebildet werden.

Durch diesen lamellaren bzw. sandwichartigen Aufbau ist es möglich, dem Dämpfungselement 9 eine unterschiedliche, angepasste Dämpfungscharakteristik zu verleihen. So können z.B. zumindest eine Randschicht bzw. Randlage aus einem weicheren Material und zumindest eine Kernschicht bzw. Kernlage aus einem im Vergleich dazu härteren Material bestehen. Es ist damit auch möglich die Zug- und/oder Druckkräfte, die in das Dämpfungselement 9 bei einem Erdbeben eingeleitet werden entsprechend zu verteilen.

Die Seitenwände 6 sind bei der in Fig. 1 dargestellten Ausführungsvariante des Bauwerks 1 senkrecht auf die Fundamentplatte verlaufend ausgerichtet. Es ist aber auch möglich, dass die Seitenwände 6 einen zu 90 ° unterschiedlichen Winkel zur Fundamentplatte einnehmen, also beispielsweise nach außen von der Grundplatte 3 weg oder nach innen zu Grundplatte 3 hin geneigt sind. Allerdings ist auch in diesem Fall bevorzugt, wenn eine der Grundplatte 3 zugewandte Seitenfläche 12 der Seitenwände 6 in einem Winkel von zumindest annähernd, insbesondere genau, 90 ° zur Fundamentplatte verläuft, also die Seitenwände 6 eine sich in Richtung auf die Fundamentplatte verjüngenden oder verbeiternden Querschnitt aufweisen.

Das zumindest eine Dämpfungselement 9 ist aus einem elastischen Werkstoff hergestellt, sodass das Dämpfungselement 9 also elastische Eigenschaften aufweist. Beispielsweise kann das zumindest eine Dämpfungselement 9 aus einem Polyurethan und (als Copolymer mit) /oder aus Polyurea bestehen.

Polyurea ist das Ergebnis einer chemischen Reaktion zwischen einem aromatischen oder aliphatischen Isocyanat und einer Harz-Mischungskomponente (insbesondere einem Polyamin). Polyurea hat die Vorteile der hohen Temperaturstabilität (von -30°C bis +150°C), einer sehr guten Elastizität (bis zu 600% Elastizität), einer sehr guten Wasserresistenz, einer naht- und fugenlosen Einbringung in den Spalt 8, und einer sehr guten Haftung.

Das zumindest eine Dämpfungselement 9 kann auch rezykliertes Elastomermaterial, das z.B. durch die Zerkleinerung von Altreifen oder anderen Elastomerprodukten gewonnen wird, aufweisen. Dieses Recylcat kann beispielsweise mit einem vor der Aushärtung dünnflüssigen Polyurethan gebunden werden.

Die Recyclatpartikel können eine Partikelgröße ausgewählt aus einem Bereich von 0,2 mm bis 10 mm aufweisen.

Es ist dabei auch möglich, dass die Recyclatpartikel unterschiedlich verteilt in dem Dämpfungselement 9 angeordnet werden. So sind beispielsweise Schichten oder Lagen mit einem höheren Anteil an Recylcatpartikel möglich, insbesondere zumindest eine Kernschicht oder Kernlage. Es wird damit erreicht, dass in den Randschichten des Dämpfungselementes 9 ein höherer Anteil an Bindemittel vorhanden ist, womit die Anbindung an die Grundplatte 3 und/oder die Seitenwände 6 des Fundamentes 2 verbessert werden kann.

Ebenso ist ein gradierter Konzentrationsverlauf an Recyclatpartikel im Dämpfungselement 9 möglich, wobei der Gradient in senkrechter und/oder horizontaler Richtung ausgebildet werden kann.

Als Werkstoff für das zumindest eine Dämpfungselement 9 kann auch Weichbitumen verwendet werden.

Die genannten Werkstoffe für das zumindest eine Dämpfungselement 9 sind die bevorzugt verwendeten Werkstoffe. Es können aber auch andere Werkstoffe mit entsprechend elastischen Eigenschaften eingesetzt werden.

Das zumindest eine Dämpfungselement 9 kann eine Höhe 12 aufweisen, die zwischen 20 % und 100 % einer Höhe 13 der Grundplatte 3 in gleicher Richtung entspricht.

Die Gleitlagerung 4 ist bevorzugt durch ein, eine Gleitschicht bildendes Gleitelement in Form eine Kunststofffolie oder eine Kunststoffplatte gebildet sein.

Unter einer Kunststofffolie im Sinne der Erfindung wird eine Folie mit einer Schichtdicke zwischen 0,2 mm und 3 mm verstanden.

Unter einer Kunststoffplatte im Sinne der Erfindung wird eine Platte mit einer Schichtdicke zwischen 1 mm und 10 mm verstanden.

Die Kunststofffolie bzw. die Kunststoffplatte kann frei liegend, d.h. ohne Anbindung an weitere Bauteile des Bauwerks 1 auf einer oberen, in Richtung auf die Grundplatte 3 weisenden Oberfläche 15 der Fundamentplatte angeordnet werden.

Es ist aber auch möglich, dass das Gleitelement mit der Grundplatte 3 oder der Fundamentplatte verbunden, beispielsweise verklebt ist.

Es ist weiter möglich, dass mehr als ein Gleitelement, insbesondere zwei Gleitelemente, also mehr als eine Kunststofffolie oder mehr als eine Kunststoffplatte angeordnet werden. In diesem Fall kann eines dieser Gleitelemente mit der Grundplatte 3 und ein oder das andere mit der Fundamentplatte verbunden, beispielsweise verklebt, sein. Es wird damit möglich, dass die Gleitelemente aufeinander abgleiten.

Es sind auch mehr als zwei Gleitelemente anordenbar.

Das Gleitelement oder die Gleitelemente, also beispielsweise die Kunststofffolie oder die Kunststoffplatte, können einstückig ausgebildet sein. Es ist aber auch möglich, das oder die Gleitelement(e) mehrteilig herzustellen, beispielsweise aus mehreren, einander insbesondere überlappenden, Folienbahnen oder mehreren nebeneinander angeordneten Kunststoffplatten.

Als Kunststoff für das oder die Gleitelement(e) kann ein Kunststoff verwendet werden, der ausgewählt ist aus einer Gruppe umfassend PE (Polyethylen), insbesondere UHMWPE (Ultra-high-molecular-weight polyethylene), PTFE (Polytetrafluoräthylen), POM (Polyoxymethylen), faserverstärkte Kunststoffe, wie GFK (glasfaserverstärkte Kunststoffe). Als Fasern zur Verstärkung können aber auch andere Mineralfasern, wie z.B. Carbonfasern oder Basaltfasern, verwendet werden. Auch die in genannten Kunststoffe PE, PTFE, POM können faserverstärkt sein.

Es ist dabei auch möglich, für die zwei oder mehreren Gleitelemente unterschiedliche Kunststoffe zu verwenden.

In der bevorzugen Ausführungsvariante der Erfindung erstreckt sich die Gleitlagerung 4 bis unterhalb des zumindest einen elastischen Dämpfungselementes 9, d.h. bis unterhalb des zumindest einen Gleitelementes der Gleitlagerung 4. Besonders bevorzugt bedeckt die Gleitlagerung 4 die gesamte Oberfläche der Fundamentplatte zwischen den Seitenwänden 9, wie dies in Fig. 1 dargestellt ist.

Weiter kann das zumindest eine elastische Dämpfungselement 9 mit der Grundplatte 3 und/oder dem Kragen, d.h. den Seitenwänden 6 des Fundaments 2 verbunden sein bzw. werden. Beispielsweise kann das zumindest eine Dämpfungselement 9 vorgefertigt und dann mechanisch oder durch Klebung mit der Grundplatte 3 und/oder den Seitenwänden 6 verbunden werden. Das zumindest eine Dämpfungselement 9 kann aber auch an Ort und Stelle durch Anmischen der Rohstoffe hiefür, also beispielsweise zumindest eines Polyols und zumindest eines Isocyanats, und durch Vergießen dieser Mischung in den Spalt 8 eingebaut werden. Dabei entsteht ebenfalls eine Anbindung an die Grundplatte 3 und/oder die Seitenwände 6 aufgrund der adhäsiven Eigenschaften dieser Rohstoffe (= Dämpfungsmasse) und des daraus gebildeten Dämpfungselementes 4 und/oder durch Formschluss aufgrund einer Porigkeit bzw. von Poren in der Grundplatte 3 und/oder den Seitenwänden 6 an deren Oberflächen, in die die Dämpfungsmasse beim Eingießen eindringt.

Zur weiteren Verbesserung der Anbindung des zumindest einen Dämpfungselementes 9 an die Grundplatte 3 und/oder die Seitenwände 6 kann vorgesehen sein, dass an der Grundplatte 3, d.h. an den Stirnflächen der Grundplatte 3, und/oder den Seitenwänden 6 des Fundaments 3 Ankerelemente 16, 17 vorgesehen sind, die in das zumindest eine elastische Dämpfungselement 9 teilweise eingebettet, insbesondere eingegossen, sind, wie dies in Fig. 1 angedeutet ist.

Die Ankerelemente 16, 17 können beispielsweise durch Metallanker, Stahlstäbe wie sie zur Bewehrung verwendet werden, Bewehrungsstäbe aus Mineralfasern, wie z.B. Glasfasern oder Basaltfasern oder Carbonfasern, gebildet sein.

Wie bereits erwähnt füllt das zumindest eine Dämpfungselement 9 den Spalt 8 über seine Spaltbreite 11 betrachtet bevorzugt zur Gänze aus. Es wird damit, neben den voranstehend angeführten Effekten, auch erreicht, dass das zumindest eine Gleitelement der Gleitlagerung 4, also insbesondere die Kunststofffolie(n) oder die Kunststoffplatte(n) besser vor Umwelteinflüssen geschützt ist/sind, selbst wenn sich diese über die gesamte Fläche des Fundaments 2 zwischen den Seitenwänden 6 erstreckt. Damit kann die Gleitlagerung 4 dauerhafter ausgebildet werden.

Durch die temporäre Anbringung von hydraulischen Pressen im Spalt 8 zwischen dem Kragen der Fundamentplatte und der Grundplatte 3 kann die Funktionsfähigkeit des Systems vor und nach Einbau des zumindest einen elastische Dämpfungselementes 9 geprüft werden.

Die Ausführungsbeispiele zeigen bzw. beschreiben mögliche Ausführungsvarianten des Bauwerks 1, wobei an dieser Stelle bemerkt sei, dass im Rahmen der Erfindung, welche durch die angefügten Ansprüche definiert wird, auch diverse Kombinationen der einzelnen Ausführungsvarianten untereinander möglich sind.

Der Ordnung halber sei abschließend daraufhingewiesen, dass zum besseren Verständnis des Aufbaus des Bauwerks 1 diesel bzw. dessen Bestandteile teilweise unmaßstäblich und/oder vergrößert und/oder verkleinert dargestellt wurden.

### Bezugszeichenliste

- 1: Bauwerk
- 2: Fundament
- 3: Grundplatte
- 4: Gleitlagerung
- 5: Oberfläche

- 6: Seitenwand
- 7: Niveau
- 8: Spalt
- 9: Dämpfungselement
- 10: Breite

- 11: Spaltbreite
- 12: Seitenfläche
- 13: Höhe
- 14: Höhe
- 15: Oberfläche

- 16: Ankerelement
- 17: Ankerelement

## Patentansprüche

1. Bauwerk (1) mit einer Erdbebendämpfung umfassend ein Fundament (2) und eine Grundplatte (3), wobei zwischen dem Fundament (2) und der Grundplatte (3) eine Gleitlagerung (4) ausgebildet ist, sodass die Grundplatte (3) verschiebbar auf dem Fundament (2) angeordnet ist, wobei die Gleitlagerung (4) durch zumindest eine Kunststofffolie oder Kunststoffplatte gebildet ist und sich vollflächig über zumindest annähernd die gesamte Fläche erstreckt, die die Grundplatte (3) auf der dem Fundament (2) zugewandten Seite aufweist, wobei weiterhin das Fundament (2) einen Kragen und eine solche Größe aufweist, dass zwischen der Grundplatte (3) und dem Kragen über den gesamte Umfang der Grundplatte (3) betrachtet ein Spalt (8) ausgebildet ist, wobei in diesem Spalt (8) zumindest ein sich über den gesamten Umfang der Grundplatte (3) erstreckendes elastisches Dämpfungselement (9) angeordnet ist.

2. Bauwerk (1) nach Anspruch 1, **dadurch gekennzeichnet, dass** die Gleitlagerung (4) zwei Kunststofffolien oder Kunststoffplatten aufweist, wobei eine Kunststofffolie oder Kunststoffplatte mit dem Fundament (2) und die andere Kunststofffolie oder Kunststoffplatte mit der Grundplatte (3) verbunden ist.

3. Bauwerk (1) nach Anspruch 1 oder 2, **dadurch gekennzeichnet, dass** der Kunststoff der Kunststofffolie oder Kunststoffplatte ausgewählt ist aus einer Gruppe umfassend PE, insbesondere UHMWPE, PTFE, POM, faserverstärkte Kunststoffe, insbesondere GFK.

4. Bauwerk (1) nach einem der Ansprüche 1 bis 3, **dadurch gekennzeichnet, dass** das zumindest eine elastische Dämpfungselement (9) mit der Grundplatte (3) und/oder dem Kragen des Fundaments (2) verbunden ist.

5. Bauwerk (1) nach Anspruch 4, **dadurch gekennzeichnet, dass** an der Grundplatte (3) und/oder dem Kragen des Fundaments (2) Ankerelemente (16, 17) vorgesehen sind, die in das zumindest eine elastische Dämpfungselement (9) eingegossen sind.

6. Bauwerk (1) nach einem der Ansprüche 1 bis 5, **dadurch gekennzeichnet, dass** sich die Gleitlagerung (4) bis unterhalb des zumindest einen elastischen Dämpfungselementes (9) erstreckt.

7. Verfahren zur Herstellung einer Erdbebendämpfung für ein Bauwerk (1), wobei das Bauwerk (1) ein Fundament (2) und eine Grundplatte (3) umfasst, wobei zwischen dem Fundament (2) und der Grundplatte (3) eine Gleitlagerung (4) ausgebildet wird, sodass die Grundplatte (4) verschiebbar auf dem Fundament (2) angeordnet ist, wobei die Gleitlagerung (4) durch zumindest eine Kunststofffolie oder Kunststoffplatte gebildet und vollflächig über zumindest annähernd die gesamte Fläche erstreckend ausgebildet wird, die die Grundplatte (3) auf der dem Fundament (2) zugewandten Seite aufweist, wobei weiterhin an dem Fundament (2) ein Kragen ausgebildet und das Fundament (2) mit einer solchen Größe hergestellt wird, dass zwischen der Grundplatte (3) und dem Kragen über den gesamte Umfang der Grundplatte (3) betrachtet ein Spalt (8) ausgebildet wird, wobei in diesem Spalt (8) zumindest ein sich über den gesamten Umfang der Grundplatte (3) erstreckendes elastisches Dämpfungselement (9) angeordnet wird.

8. Verfahren nach Anspruch 7, **dadurch gekennzeichnet, dass** der Spalt (8) zwischen dem Kragen und der Grundplatte (3) zumindest teilweise mit einer elastischen Dämpfungsmasse zur Herstellung des zumindest einen elastischen Dämpfungselementes (9) ausgegossen wird.

## Claims

1. A building (1) having an earthquake-damping system, comprising a foundation (2) and a base plate (3), wherein a plain bearing (4) is formed between the foundation (2) and the base plate (3) so that the base plate (3) is movably arranged on the foundation (2), wherein the plain bearing (4) is formed by at least one plastic foil or plastic plate and extends over the entire surface of the approximately entire surface area that the base plate (3) has on the side facing the foundation (2), wherein, furthermore, the foundation (2) has a collar and such a size that a gap (8) is formed between the base plate (3) and the collar over the entire circumference of the base plate (3), wherein at least one damping element (9) extending over the entire circumference of the base plate (3) is arranged in this gap (8).

2. The building (1) according to claim 1, **characterized in that** the plain bearing (4) has two plastic foils or plastic plates, wherein one plastic foil or plastic plate is connected to the foundation (2) and the other plastic foil or plastic plate is connected to the base plate (3).

3. The building (1) according to claim 1 or 2, **characterized in that** the plastic material of the plastic foil or plastic plate is selected from the group comprising PE, in particular UHMWPE, PTFE, POM, fiber-reinforced plastics, in particular GFK.

4. The building (1) according to any one of claims 1 to 3, **characterized in that** the at least one elastic damping element (9) is connected to the base plate (3) and/or the collar of the foundation (2).

5. The building (1) according to claim 4, **characterized in that** provided on the base plate (3) and/or the collar of the foundation (2) there are anchor elements (16, 17) that are molded in the at least one elastic damping element (9).

6. The building (1) according to any one of claims 1 to 5, **characterized in that** the plain bearing (4) extends to below the at least one elastic damping element (9).

7. A method for producing an earthquake-damping system for a building (1), wherein the building (1) comprises a foundation (2) and a base plate (3), wherein a plain bearing (4) is formed between the foundation (2) and the base plate (3) so that the base plate (3) is movably arranged on the foundation (2), wherein the plain bearing (4) is formed by at least one plastic foil or plastic plate and is formed to extend over the entire surface of the approximately entire surface area that the base plate (3) has on the side facing the foundation (2), wherein, furthermore, a collar is formed on the foundation (2) and the foundation (2) is produced in such a size that a gap (8) is formed between the base plate (3) and the collar over the entire circumference of the base plate (3), wherein at least one damping element (9) extending over the entire circumference of the base plate (3) is arranged in this gap (8).

8. The method according to claim 7, **characterized in that** the gap (8) between the collar and the base plate (3) is at least partially filled with an elastic damping compound for creating the at least one damping element (9).

## Revendications

1. Édifice (1) doté d'un système d'amortissement antisismique comprenant une fondation (2) et une plaque de base (3), un palier à glissement (4) étant constitué entre la fondation (2) et la plaque de base (3) de manière à ce que la plaque de base (3) soit disposée de manière mobile sur la fondation (2), le palier à glissement (4) étant constitué par au moins un film en plastique ou une plaque en plastique et s'étendant sur toute la surface sur au moins approximativement l'ensemble de la surface que la plaque de base (3) présente sur sa face tournée vers la fondation (2), la fondation (2) présentant en outre une collerette et une dimension telle que, vu entre la plaque de base (3) et la collerette sur toute la circonférence de la plaque de base (3), soit réalisé un intervalle (8), au moins un élément d'amortissement (9) élastique s'étendant sur toute la circonférence de la plaque de base (3) étant disposé dans cet intervalle (8).

2. Édifice (1) selon la revendication 1, **caractérisé en ce que** le palier à glissement (4) présente deux films en plastique ou plaques en plastique, un film en plastique ou une plaque en plastique étant raccordé à la fondation (2) et l'autre film en plastique ou plaque en plastique étant raccordé à la plaque de base (3).

3. Édifice (1) selon la revendication 1 ou 2, **caractérisé en ce que** le plastique du film en plastique ou de la plaque en plastique est sélectionné dans le groupe comprenant le PE, en particulier polyéthylène à haute densité, PTFE, POM, les plastiques renforcés aux fibres, en particulier le GFK.

4. Édifice (1) selon une des revendications 1 à 3, **caractérisé en ce que** l'au moins un élément d'amortissement élastique (9) est raccordé à la plaque de base (3) et/ou à la collerette de la fondation (2).

5. Édifice (1) selon la revendication 4, **caractérisé en ce que**, au niveau de la plaque de base (3) et/ou de la collerette de la fondation (2), il est prévu des éléments d'ancrage (16, 17) qui sont coulés dans l'au moins un élément d'amortissement élastique (9).

6. Édifice (1) selon une des revendications 1 à 5, **caractérisé en ce que** le palier à glissement (4) s'étend jusqu'en-dessous de l'au moins un élément d'amortissement élastique (9).

7. Procédé de fabrication d'un système d'amortissement antisismique pour édifice (1), dans lequel l'édifice (1) comprend une fondation (2) et une plaque de base (3), un palier à glissement (4) étant constitué entre la fondation (2) et la plaque de base (3) de manière à ce que la plaque de base (3) soit disposée de manière mobile sur la fondation (2), le palier à glissement (4) étant constitué par au moins un film en plastique ou une plaque en plastique et s'étendant sur toute la surface sur au moins approximativement l'ensemble de la surface que la plaque de base (3) présente sur sa face tournée vers la fondation (2), une collerette étant en outre réalisée au niveau de la fondation (2) et la fondation (2) étant réalisée avec une dimension telle que, vu entre la plaque de base (3) et la collerette sur toute la circonférence de la plaque de base (3), soit réalisé un intervalle (8), au moins un élément d'amortissement (9) élastique s'étendant sur toute la circonférence de la plaque de base (3) étant disposé dans cet intervalle (8).

8. Procédé selon la revendication 7, **caractérisé en ce que** l'intervalle (8) entre la collerette et la plaque de base (3) est rempli du moins partiellement d'une masse d'amortissement élastique pour réaliser l'au moins un élément d'amortissement élastique (9).
